# FASCICULE DE BREVET EUROPEEN

(11) **EP 1 199 211 B1**
(45) Date de publication et mention de la délivrance du brevet: **28.01.2004**
(21) Numéro de dépôt: 01402426.9
(22) Date de dépôt: 21.09.2001
(51) Int. Cl.: B60N 2/02, B60N 2/06, B60N 2/22

(54) **Glissière pour siège de véhicule avec système de détection de position**
Fahrzeugsitzgleitschiene mit Positionsmesseinrichtung
Slide for a vehicle seat with position-measuring device

(30) Priorité: 19.10.2000 FR 0013388
(43) Date de publication de la demande: 24.04.2002
(73) Titulaire: Faurecia, 92100 Boulogne (FR)
(72) Inventeur: Jaudouin, Paul, 61100 St. Georges des Groseilliers (FR); De Coninck, Daniel, 61100 Flers (FR)
(74) Mandataire: Burbaud, Eric

(56) Documents cités:
- US-A- 5 803 491
- US-A- 6 053 529
- US-A- 6 095 555

## Description

La présente invention se rapporte à une glissière pour siège de véhicule et à un système pour véhicule comprenant un siège équipé d'une telle glissière.

Plus particulièrement, l'invention a notamment pour objet une glissière comprenant un profilé mâle et un profilé femelle montés mobiles l'un par rapport à l'autre sur une course longitudinale prédéterminée, la glissière comprenant, en outre, un détecteur disposé sur l'un des profilés mâle et femelle et un organe détectable disposé sur l'autre des profilés mâle et femelle, le détecteur étant adapté pour détecter la présence de l'organe détectable lorsque ledit organe détectable est situé dans une première plage de ladite course ou l'absence dudit organe détectable lorsque ledit organe détectable est situé dans une deuxième plage de la course, les première et deuxième plages définissant l'ensemble de la course prédéterminée des profilés mâle et femelle l'un par rapport à l'autre.

De telles glissières équipées d'un détecteur et d'un organe détectable sont notamment connues des brevets US 6 053 529 et US 6 095 555. Dans ces glissières, le détecteur et/ou l'organe détectable sont situés à l'extérieur des profilés mâle et femelle si bien que la zone de détection dans laquelle le détecteur est supposé détecter la présence ou non de l'organe détectable est accessible depuis l'extérieur de la glissière. Dès lors, on comprend que la présence accidentelle d'objets tels que des pièces de monnaie ou des graviers dans la zone de détection du détecteur est susceptible de provoquer une détection accidentelle qui ne correspond pas à la position relative exacte entre les profilés mâle et femelle.

Les détections effectuées étant prises en compte dans le cadre des lois de pilotage de divers dispositifs actionneurs tels que les suspensions de véhicule, la climatisation ou le déclenchement des sacs de sécurité gonflable, on comprend qu'une détection accidentelle et erronée conduit à un pilotage erroné des dispositifs actionneurs.

La présente invention a notamment pour but de pallier ces inconvénients.

A cet effet, selon l'invention, une glissière pour siège de véhicule du genre en question est caractérisé en ce que le profilé mâle présente une section de forme générale en "U" comportant un fond horizontal à partir duquel s'étendent deux ailes latérales sensiblement verticales qui se prolongent par des rabats orientés vers l'extérieur du "U", chaque rabat étant pourvu d'un bord, en ce que le profilé femelle présente une section de forme générale en "U" comportant un fond horizontal à partir duquel s'étendent deux parois latérales formées chacune par une aile sensiblement verticale qui se prolonge par un retour d'aile orienté vers l'intérieur du "U" et dirigé vers le fond dudit profilé femelle, les rabats du profilé mâle venant se loger entre les ailes verticales et les retours d'ailes du profilé femelle, et les retours d'ailes du profilé femelle venant se loger entre les ailes verticales et les rabats du profilé mâle, en ce que l'organe détectable est formé par un ressaut solidaire du bord d'un des rabats du profilé mâle, et en ce que la paroi latérale correspondante du deuxième profilé présente une ouverture disposée en correspondance avec le détecteur adapté pour détecter la présence ou l'absence du ressaut du profilé mâle.

Grâce à ces dispositions, l'organe détectable, formé par le ressaut du profilé mâle, est directement logé dans un espace protégé formé par l'aile verticale et le retour d'aile de la paroi latérale correspondante du profilé femelle, et la présence de l'ouverture sur ladite paroi latérale du profilé femelle permet de positionner le détecteur de manière à ce que sa zone de détection soit dirigée en direction de l'espace protégé formé par l'aile verticale et le retour d'aile de la paroi latérale dudit profilé femelle.

Dans des modes de réalisation préférés de l'invention, on peut éventuellement avoir recours en outre à l'une et/ou à l'autre des dispositions suivantes :
- le détecteur est disposé au moins en partie dans l'ouverture de la paroi latérale du profilé femelle ;
- le ressaut s'étend longitudinalement entre deux extrémités et la paroi latérale correspondante du deuxième profilé qui présente l'ouverture s'étend entre deux extrémités qui sont chacune pourvues d'un élément de butée destiné à coopérer avec les extrémités du ressaut pour délimiter ladite course longitudinale prédéterminée des profilés mâle et femelle l'un par rapport à l'autre ;
- le détecteur comprend :
   . d'une part, un organe élastiquement déformable ayant une première extrémité solidaire de la paroi latérale du profilé femelle et une deuxième extrémité libre disposée dans l'ouverture du profilé femelle et au voisinage du bord du profilé mâle, le ressaut du profilé mâle étant disposé pour déplacer ladite extrémité libre en déformant l'organe élastiquement déformable lorsque ledit ressaut est situé en regard du détecteur,
   . et, d'autre part, un capteur apte à détecter une déformation de l'organe élastiquement déformable lorsque le ressaut du profilé mâle déplace l'extrémité libre dudit organe élastiquement déformable ;
- le capteur est rapporté sur un organe de support fixé de manière amovible sur la paroi latérale du profilé femelle, ledit capteur étant disposé en regard de l'ouverture du profilé femelle ;
- le détecteur comprend :
   . un élément pivotant ayant une extrémité montée pivotante sur un organe de support rapporté sur le profilé femelle et une extrémité libre disposée dans l'ouverture du profilé femelle et au voisinage du bord du profilé mâle, le ressaut du profilé mâle étant disposé pour faire pivoter l'extrémité libre de l'élément pivotant lorsque ledit ressaut est situé en regard du détecteur,
   . et d'autre part, un capteur monté sur l'organe de support, le capteur étant apte à détecter le pivotement de l'élément pivotant ;
- le détecteur comprend :
   . au moins un organe magnétique et des moyens d'excitation pour créer un champ magnétique dans ledit organe magnétique, ledit un organe magnétique et les moyens d'excitation étant au moins partiellement logés dans l'ouverture du profilé femelle de façon à définir un circuit magnétique avec le ressaut lorsque ce dernier se présente en regard dudit organe magnétique, ledit ressaut étant réalisé dans une matière également magnétique,
   . et une sonde à effet hall solidaire de l'organe magnétique, ladite sonde étant agencée pour délivrer un signal au moins lorsque ledit ressaut est en regard de l'organe magnétique en fermant le circuit magnétique ;
- le détecteur est fixé sur un organe de support rapporté par clipsage sur la paroi latérale du profilé femelle ;
- l'organe de support présente une section de forme générale en "U" comportant :
   . une plaque intermédiaire sur laquelle est rapporté le détecteur logé dans l'ouverture réalisée sur l'aile verticale du profilé femelle,
   . une plaque d'extrémité qui s'étend à partir de la plaque intermédiaire et qui présente une forme complémentaire du retour d'aile dudit profilé femelle, et
   . deux doigts de clipsage qui s'étendent à partir de la plaque intermédiaire, les deux doigts de clipsage étant engagés dans des trous réalisés dans une zone de coin situé entre le fond du profilé femelle et l'aile verticale correspondante dudit profilé femelle ; et
- l'organe de support comprend, en outre, un élément rabattable relié à la plaque intermédiaire et qui est destiné à être rabattu entre les deux doigts de clipsage et contre la zone de coin du profilé femelle, de manière à verrouiller l'organe de support sur le profilé femelle après engagement des doigts de clipsage dans les trous correspondants.

L'invention a également pour objet un siège de véhicule comprenant une assise supportée par au moins une glissière telle que définie ci-dessus.

Par ailleurs, l'invention a également pour objet un système pour véhicule, comprenant :
- un siège de véhicule tel que défini ci-dessus,
- au moins un dispositif actionneur présentant deux modes de fonctionnement, et
- un dispositif de commande relié au détecteur de la glissière et adapté pour faire fonctionner le dispositif actionneur sélectivement selon l'un de ses deux modes de fonctionnement en fonction de la position du siège par rapport au plancher du véhicule détectée par le détecteur de la glissière.

Selon une autre caractéristique avantageuse du système pour véhicule, le dispositif actionneur est un sac de sécurité gonflable disposé pour protéger un occupant du siège en cas d'accident, et le dispositif de commande est adapté pour gonfler le sac de sécurité en cas d'accident.

D'autres caractéristiques et avantages de l'invention apparaîtront au cours de la description suivante de plusieurs de ses formes de réalisation, données à titre d'exemples non limitatifs, en regard des dessins joints.

Sur les dessins :
- la figure 1 est une vue schématique d'un véhicule équipé d'un système et d'un siège selon une forme de réalisation de l'invention,
- la figure 2 est une vue schématique en perspective éclatée d'un profilé mâle et d'un profilé femelle d'une glissière,
- la figure 2bis est une vue schématique en coupe longitudinale de la glissière selon l'invention,

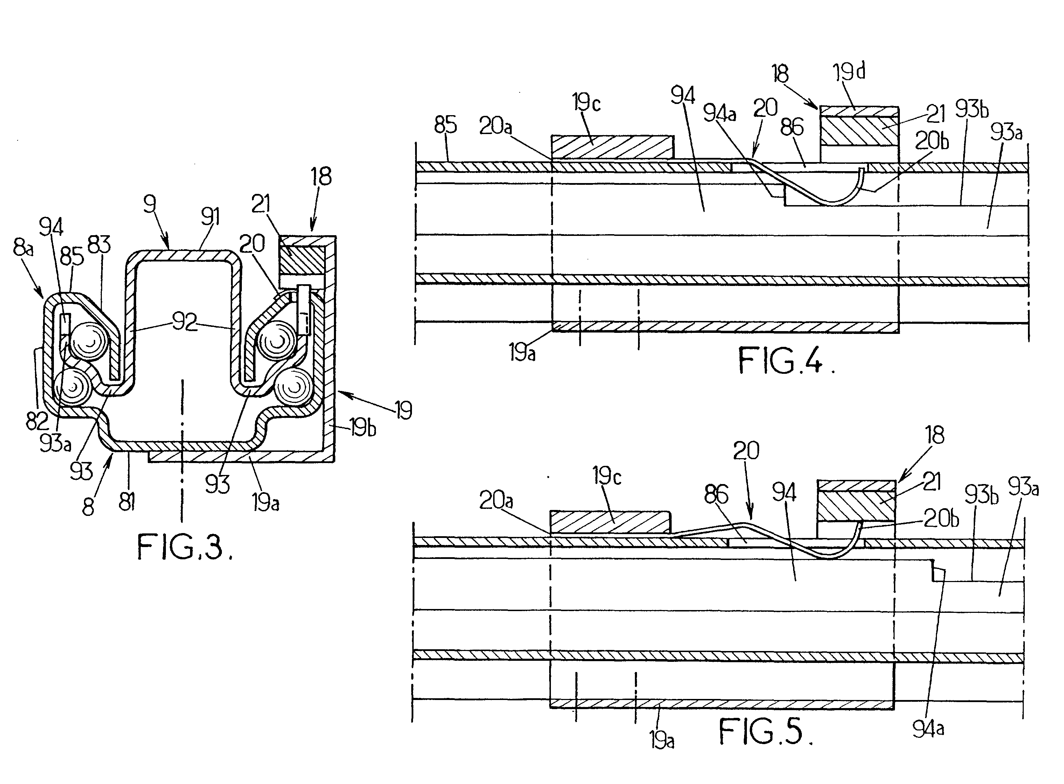

- la figure 3 est une vue en coupe transversale de la glissière, selon le premier mode de réalisation,

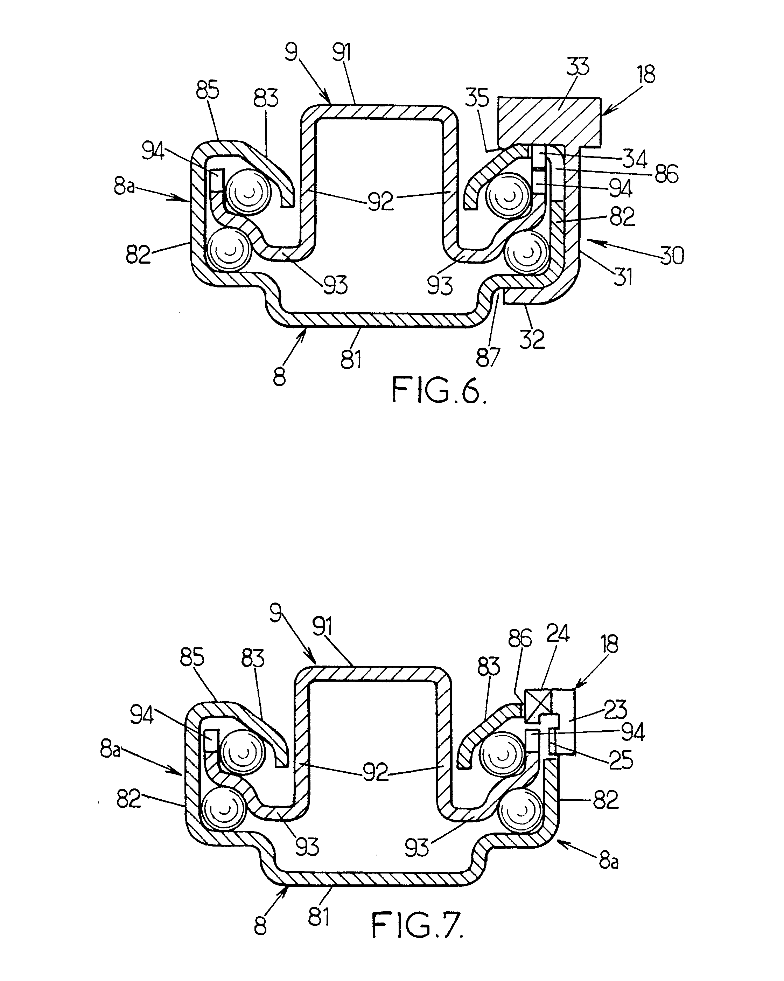

- les figures 4 et 5 sont des vues en coupe longitudinale de la glissière de la figure 3 illustrée dans des positions relatives différentes,
- la figure 6 est une vue en coupe transversale de la glissière selon un second mode de réalisation,
- la figure 7 est une vue en coupe transversale de la glissière selon un troisième mode de réalisation,

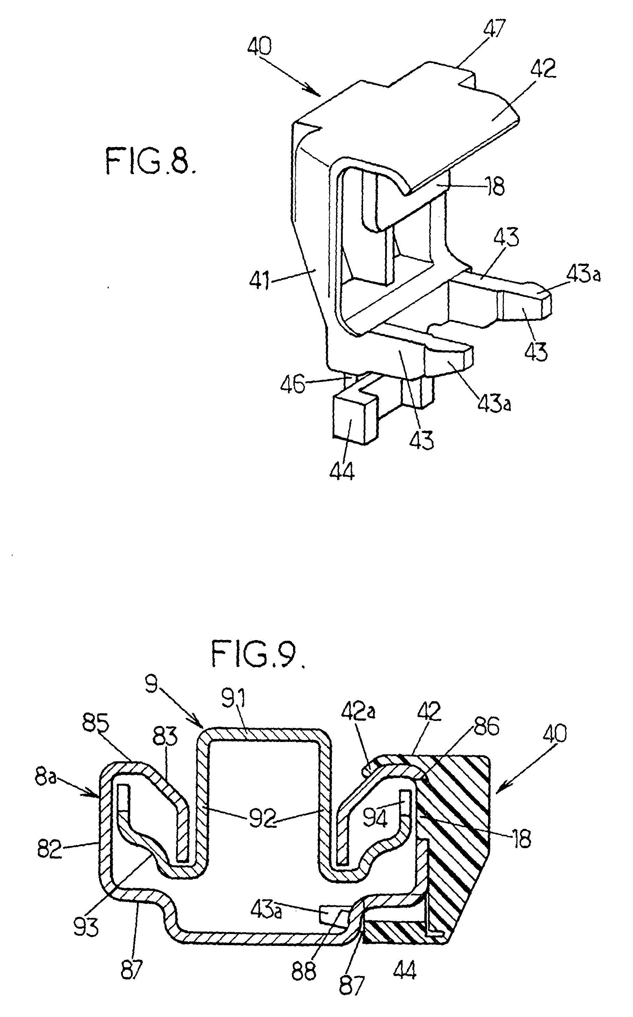

- la figure 8 représente une vue schématique en perspective d'un détecteur rapporté sur un organe de support destiné à être clipsé sur la glissière, et
- la figure 9 représente une vue en coupe transversale de la glissière selon un quatrième mode de réalisation, l'organe de support de la figure 8 étant rapporté par clipsage sur la glissière.

Sur les différentes figures, les mêmes références désignent des éléments identiques ou similaires.

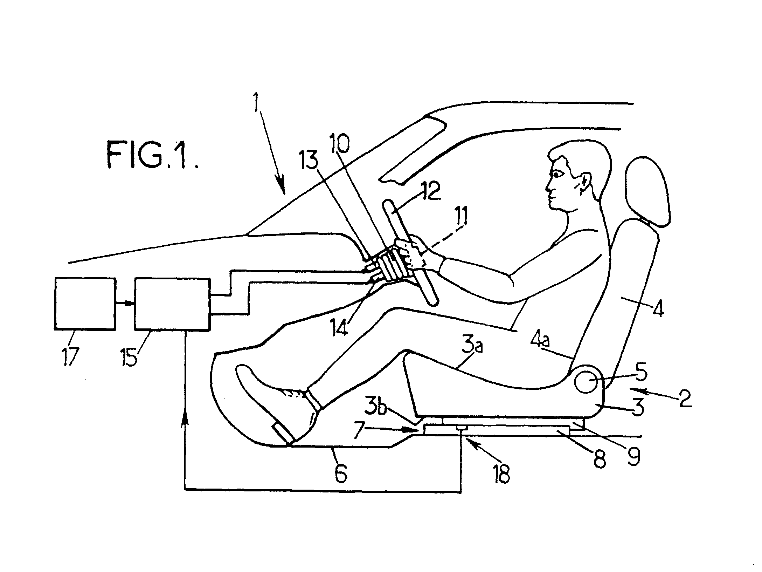

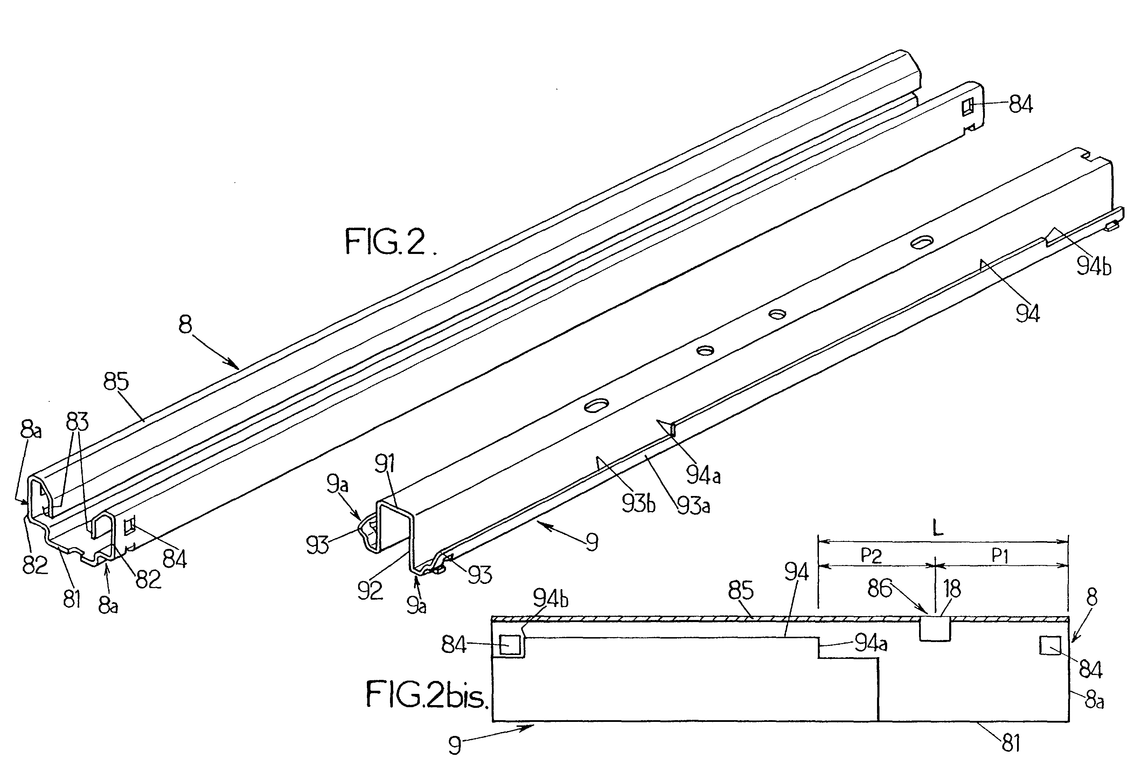

La figure 1 représente un véhicule automobile 1 qui comporte des sièges 2 dont l'un est représenté sur la figure 1, en l'occurrence le siège du conducteur.

Le siège 2 comporte un dossier 4 qui présente une surface d'appui avant 4a et une assise 3 qui s'étend longitudinalement entre une extrémité avant et une extrémité arrière. Cette extrémité arrière de l'assise 3 est reliée au dossier 4 au moyen d'une articulation 5 qui permet de faire varier l'angle d'inclinaison du dossier 4 par rapport à l'assise 3. L'assise présente également une surface d'appui supérieure 3a qui définit avec la surface d'appui avant 4a du dossier un espace d'accueil pour l'occupant du siège. L'assise présente aussi une surface inférieure 3b reliée au plancher 6 du véhicule au moyen d'un système de glissières 7 dont une seule est représentée sur la figure 1. La glissière 7 comprend un profilé femelle 8 fixé au plancher 6 du véhicule et un profilé mâle 9 monté coulissant longitudinalement dans le profilé femelle 8. Le profilé mâle 9 est destiné à se déplacer sur une course longitudinale prédéterminée par rapport au profilé femelle 8. Le profilé mâle 9 est directement fixé à la surface inférieure 3b de l'assise 3 du siège.

Ainsi, la glissière 7 permet de régler la position longitudinale de l'assise par rapport au plancher 6 du véhicule.

Pour protéger l'occupant du siège en cas d'accident de la route, le véhicule comporte en outre un ou plusieurs sacs de sécurité gonflables (airbag) par exemple un sac de sécurité gonflable 10 disposé dans la partie centrale 11 du volant 12 du véhicule. Ce sac de sécurité gonflable 10 présente deux modes de fonctionnement selon que l'on met le feu à l'une ou à l'autre de deux charges explosives 13, 14 adaptées pour générer des volumes de gaz différents à l'intérieur du sac de sécurité gonflable lors de son déploiement.

La mise à feu de l'une ou l'autre des deux charges explosives 13 et 14 est effectuée par un dispositif de contrôle 15 tel qu'un microcontrôleur électronique, en fonction :
- d'informations provenant d'un capteur de choc 17 tel qu'un accéléromètre ou similaire,
- et d'informations sur la position longitudinale atteinte par l'assise par rapport au plancher du véhicule.

A cet effet, la glissière 7 du siège de véhicule est équipée d'un détecteur 18 qui est destiné à être activé lorsque le profilé mâle 9 est situé dans une certaine plage de sa course longitudinale par rapport au profilé femelle 8. Ce détecteur 18 est relié par liaison filière ou par tout autre moyen approprié au dispositif de contrôle 15 afin de lui fournir les informations nécessaires lorsque le siège 2 a atteint une certaine position par rapport au plancher 6 du véhicule.

Dans l'exemple de réalisation représenté sur la figure 2, le profilé femelle 8 présente une section de forme générale en "U" qui comprend un fond horizontal 81 à partir duquel s'étendent deux parois latérales 8a formées chacune par une aile verticale 82 qui se prolonge par un retour d'aile 83 orienté vers l'intérieur du "U" et dirigé vers le fond 81 dudit profilé femelle. Chaque retour d'aile 83 et l'aile verticale 82 qui lui est associée délimitent une portion sensiblement horizontale 85. Le profilé mâle 9, quant à lui, présente également une section de forme générale en "U" inversé qui comporte un fond horizontal 91 à partir duquel s'étendent deux parois latérales 9a formées chacune par une aile verticale 92, chaque aile verticale 92 se prolongeant par un rabat 93 orienté vers l'extérieur du "U". Chaque rabat 93 du profilé mâle 9, comprend une portion d'extrémité 93a qui s'étend sensiblement verticalement et parallèlement aux ailes verticales 92, et ces portions d'extrémité 93a sont chacune munies d'un bord 93b qui comprend au moins sur une portion longitudinale un ressaut 94 formé d'une seule pièce avec le rabat 93 qui lui est associé.

Comme on peut le voir sur la figure 3, lorsque le profilé mâle 9 est monté à l'intérieur du profilé femelle 8, les rabats 93 et ressauts 94 du profilé mâle 9 viennent donc se loger dans un espace protégé défini entre les ailes verticales 82 et les retours d'ailes 83 du profilé femelle 8, tandis que les retours d'ailes 83 du profilé femelle 8 viennent se loger entre les ailes verticales 92 et les rabats 93 du profilé mâle 9.

Afin d'autoriser le déplacement longitudinal du profilé mâle 9 dans le profilé femelle 8, des billes de même diamètre sont disposées de part et d'autre des rabats 93 du profilé mâle 9, lesdites billes étant maintenues en place dans les logements formés par les ailes verticales 82 du profilé femelle 8 et leurs retours d'ailes 83. Ainsi, chaque ressaut 94 s'étend longitudinalement à proximité d'une aile verticale 82 du profilé femelle 8.

Comme on peut le voir schématiquement sur la figure 2bis, l'une des parois latérales 8a du profilé femelle 8 comprend une ouverture 86 dans laquelle est disposé au moins en partie le détecteur 18 adapté pour détecter la présence ou l'absence du ressaut 94 correspondant du profilé mâle 9.

Ainsi, comme pour le ressaut 94 du profilé mâle 9, la zone de détection du détecteur 18 est également directement située dans l'espace protégé défini par l'aile verticale 82 et le retour d'aile 83 du profilé femelle, ce qui permet d'éviter une présence accidentelle d'un objet tel qu'un gravier ou une pièce de monnaie dans la zone de détection dudit détecteur 18.

Plus exactement, le détecteur 18 est disposé sur le profilé fixe 8 de telle manière qu'il détecte la présence du ressaut 94 lorsque le profilé mâle 9 est situé dans une première plage P1 de l'ensemble de sa course L ou l'absence dudit ressaut 94 lorsque le profilé mâle 9 est situé dans une deuxième plage P2.

Comme on peut le voir sur la figure 2bis, les plages P1 et P2 définissent l'ensemble de la course longitudinale du profilé mâle 9 par rapport au profilé femelle 8.

Par ailleurs, chaque ressaut 94 s'étend longitudinalement entre une extrémité avant 94a et une extrémité arrière 94b, lesquelles délimitent des épaulements avec le bord 93b des portions d'extrémité 93a des rabats du profilé mâle 9.

Chaque ressaut 94 est également destiné à coopérer avec des éléments de butée 84 disposés sur le profilé femelle 8 lorsque la glissière 7 est assemblée, c'est-à-dire lorsque le profilé mâle 9 est monté coulissant à l'intérieur du profilé femelle 8.

Comme on peut le voir plus exactement sur la figure 2, les ailes verticales 82 du profilé femelle 8 sont chacune pourvues sur leurs extrémités longitudinales des éléments de butée 84 qui sont destinés à coopérer avec les extrémités respectives 94a et 94b du ressaut 94 pour limiter le déplacement du profilé mâle à l'intérieur du profilé femelle sur une course prédéterminée L (figure 2bis). Ces éléments de butée 84 peuvent être notamment réalisés par emboutissage des extrémités longitudinales des ailes verticales 82 du profilé femelle 8, de telle manière que lesdits éléments de butée 84 soient constitués par des éléments en saillie qui dépassent dans le logement délimité par lesdites ailes 82 et les retours d'ailes 83.

Grâce à cette disposition, le ressaut 94 du profilé mâle 9 qui sert à activer le détecteur 18 lorsque le profilé mâle 9 est situé dans la première plage P1 de l'ensemble de sa course L, sert également à limiter la course longitudinale dudit profilé mâle 9 par rapport au profilé femelle 8.

Selon un premier mode de réalisation représenté sur les figures 3 à 5, le détecteur 18 comprend principalement un organe élastiquement déformable 20 et un capteur 21 apte à détecter une déformation de l'organe élastiquement déformable 20.

L'élément élastiquement déformable 20 est constitué par une lame qui comporte, d'une part, une première extrémité 20a solidaire de la portion horizontale 85 de la paroi latérale 8a du profilé femelle 8, et d'autre part, d'une extrémité libre 20b qui s'engage dans l'ouverture 86 pratiquée dans la portion horizontale 85 du profilé femelle 8. L'extrémité libre 20b de l'organe élastiquement déformable 20 est disposée au voisinage ou au contact du bord 93b du rabat 93 du profilé mâle 9, lorsque le ressaut 94 n'est pas en regard du capteur 21 (figure 4).

Le détecteur 18 comprend également un organe de support 19 qui comporte une plaque inférieure 19a disposée au contact du fond 81 du profilé femelle 8, et une plaque intermédiaire 19b qui est disposée au contact de l'aile verticale 82 du profilé femelle 8. Cette plaque intermédiaire 19b comprend une première portion d'extrémité longitudinale 19c qui est rabattue sur la portion horizontale 85 du profilé femelle 8, en retenant la première extrémité 20a de la lame élastiquement déformable 20 sur le profilé femelle 8. La première extrémité 20a de la lame 20 peut être préalablement fixée sur la portion 19c de l'organe de support 19 avant que celui-ci ne soit monté, par exemple, par clipsage sur le profilé femelle 8. La plaque intermédiaire 19b comprend également une deuxième portion d'extrémité longitudinale 19d sur laquelle est rapporté le capteur 21. La portion d'extrémité libre 20b de la lame élastiquement déformable est disposée de façon à être déplacée par l'une des extrémités 94a du ressaut 94 lorsque ce dernier est en regard du capteur 21 (figure 5). Le déplacement ou la déformation de la lame 20 est ainsi détecté par le capteur 21 qui fournit alors un signal qui est directement envoyé au dispositif de contrôle 15 (figure 1).

Le capteur 21 peut être constitué par exemple par un commutateur mécanique ou une ampoule "Reed" ou par tout autre moyen susceptible d'être actionné par le déplacement de la lame élastique. Ainsi, on peut également concevoir que le capteur soit constitué par un élément piezoélectrique disposé sur la portion médiane de la lame située entre l'extrémité fixe 20a et l'extrémité libre 20b. Ainsi, lors du déplacement du ressaut 94, l'extrémité libre 20b de la lame se déplace sensiblement verticalement en déformant ainsi la portion médiane de ladite lame, ce qui permet à l'élément piezoélectrique d'engendrer un signal électrique qui sera envoyé au dispositif de contrôle 15.

On comprend donc que le réglage de la longueur de la plage de position P1 dans laquelle on détecte la présence du ressaut 94 est simplement réalisé en positionnant de manière adéquate l'ouverture 86 et donc le détecteur 18 le long du profilé femelle 8.

Lorsque le capteur délivre un signal au dispositif de contrôle 15, ce dernier détermine alors laquelle des charges 13 ou 14 il déclencherait afin de déployer le sac de sécurité gonflable 10 si le capteur 17 détectait un choc subi par le véhicule.

La figure 6 représente un autre mode de réalisation de la glissière 7 équipée d'un détecteur 18. Ce détecteur 18 comprend un élément 34 monté pivotant sur un organe de support 30 directement clipsé sur la paroi latérale 8a du profilé femelle. L'élément pivotant 34 est logé à l'intérieur de l'ouverture 86 pratiquée à la fois sur la portion horizontale 85 et sur l'aile verticale 82 du profilé femelle 8. L'organe de support 30 comprend une portion inférieure 32 et une portion médiane 31 au contact toutes les deux de la paroi latérale 8a du profilé femelle 8. Plus particulièrement, la portion inférieure 32 de l'organe de support 30 est au contact d'une zone de coin 87 située entre le fond 81 et l'aile verticale 82 de la paroi latérale 8a du profilé femelle 8. L'organe de support 30 comprend également une portion supérieure 33 disposée sensiblement sur la portion horizontale 85 du profilé femelle 8. La portion supérieure 33 de l'organe de support est pourvue d'une extrémité inférieure 35 faisant saillie et qui est destinée à être en appui contre le retour d'aile 83 pour retenir l'organe de support lorsque ce dernier est clipsé sur le profilé femelle 8 par mise en contact de sa portion inférieure 32 contre la zone de coin 87 dudit profilé femelle.

L'élément pivotant 34 comprend une extrémité libre disposée au voisinage du bord 93b du profilé mâle, de manière que le ressaut 94 lorsqu'il est en regard du détecteur 18 fasse pivoter l'élément 34 afin d'activer un capteur logé dans la portion supérieure 33 de l'élément de support. Ce capteur peut être constitué par exemple par un commutateur mécanique ou une sonde à effet hall susceptible de détecter la présence ou l'absence d'une partie de l'élément pivotant 34.

Comme on peut le voir sur la figure 7 qui représente un autre mode de réalisation de la glissière 7, le détecteur 18 est au moins partiellement disposé dans une ouverture 86 pratiquée à la fois sur la portion horizontale 85 et sur l'aile verticale 82 du profilé femelle 8. Ce détecteur 18 comprend au moins un organe magnétique 23 solidaire du profilé femelle 8 et des moyens d'excitation 24 pour créer un champ magnétique dans ledit organe magnétique 23 qui est agencé de façon à définir un circuit magnétique avec le ressaut 94 du profilé mâle 9 lorsque ledit ressaut se présente en regard de l'organe magnétique 23. On entend ici par organe magnétique, un organe susceptible d'être conducteur d'un champ magnétique qui lui est appliqué par des moyens d'excitation. Cet organe magnétique 23 peut par exemple être réalisé dans un matériau ferromagnétique. De même, le ressaut 94 est également réalisé dans un matériau magnétique. Les moyens d'excitation magnétique peuvent être par exemple constitués par un aimant permanent 24 qui fournit donc un champ magnétique à l'organe magnétique 23 de telle façon que celui-ci constitue un circuit magnétique fermé lorsque ledit ressaut est disposé en regard du détecteur 8. L'aimant permanent est disposé, par exemple, à l'une des extrémités de l'organe 23. Afin de détecter la présence ou l'absence du ressaut, le détecteur 18 comprend une sonde à effet hall 25 disposée à l'autre extrémité de l'organe magnétique 23, cette sonde à effet hall 25 étant agencée pour délivrer un signal au dispositif de contrôle 15 lorsque le ressaut 94 du profilé mâle 9 ferme ledit circuit magnétique. Le détecteur 18 formé par l'organe magnétique 23 aux extrémités duquel sont fixés l'aimant permanent 24 et la sonde à effet hall, peut être adapté pour être directement monté par clipsage dans l'ouverture 86 du profilé femelle 8.

Le mode de réalisation représenté sur les figures 8 et 9 diffère du précédent mode de réalisation représenté sur la figure 7, en ce sens que le détecteur 18 est directement fixé sur un organe de support 40 qui est lui-même rapporté par clipsage sur la paroi latérale 8a du profilé femelle 8. Cet organe de support 40 représenté sur la figure 8 comprend principalement une plaque intermédiaire 41 à partir de laquelle s'étendent, de part et d'autre de ladite plaque intermédiaire, une plaque d'extrémité 42 et deux doigts de clipsage 43.

L'organe de support 40 présente ainsi une section de forme générale en "U". Le détecteur 18 qui comprend l'organe magnétique, les moyens d'excitation et la sonde à effet hall, est disposé sur la plaque intermédiaire 41, et plus exactement sur la face de la plaque intermédiaire qui est destinée à venir en contact avec l'aile verticale 82 du profilé femelle.

A cet effet, l'ouverture 86 est directement pratiquée sur l'aile verticale 82 et ladite ouverture 86 présente un contour ayant des dimensions sensiblement complémentaires de celles du détecteur 18 afin de permettre un engagement au moins partiel du détecteur 18 dans ladite ouverture 86. Toutefois, on peut également prévoir que le détecteur 18 ne soit pas directement logé dans l'ouverture 86 du profilé femelle mais qu'il soit plutôt disposé en correspondance avec ladite ouverture 86, ce qui permet toujours la détection de la présence ou non du ressaut 94 du profilé mâle 9.

La plaque d'extrémité 42 présente, quant à elle, un bord d'extrémité 42a légèrement courbé et orienté vers l'intérieur du "U" de manière à être en appui contre la portion horizontale 85 et le retour d'aile 83 du profilé femelle 8. L'appui du bord d'extrémité 42a de la plaque d'extrémité 42 contre le retour d'aile 83 permet de retenir l'organe de support 40 lorsque ses doigts de clipsage 43 sont engagés de façon réversible dans des trous 88 réalisés sur la paroi latérale 8a du profilé femelle 8. Les doigts de clipsage 43 comporte des crochets de clipsage 43a qui viennent s'engager dans les trous 88 de façon à accrocher l'organe de support 40 au profilé femelle 8.

Ces trous 88 sont disposés dans la zone de coin 87 située entre le fond 81 et l'aile verticale 82 de la paroi latérale 8a du profilé femelle.

L'organe de support 40 peut également comprendre un élément rabattable de verrouillage 44 relié à la plaque intermédiaire 41 au moyen de languettes déformables 46. Cet élément de verrouillage 44 est rabattu entre les doigts de clipsage 43 et contre la zone de coin 87 du profilé femelle afin de permettre la mise en butée des crochets de clipsage 43a contre le contour des trous 88 du profilé femelle.

L'organe de support 40 comprend également un connecteur 47 destiné à relier le dispositif de commande 15 au détecteur 18 au moyen d'une liaison filiaire. Ainsi, lorsque le détecteur 18 est activé ou non par le passage ou l'absence du ressaut 94, le dispositif de commande 15 détermine laquelle des charges 13 ou 14 il déclencherait afin de déployer le sac de sécurité gonflable 10 si le capteur 17 détectait un choc subi par le véhicule.

## Revendications

1. Glissière pour siège de véhicule, comprenant un profilé mâle et un profilé femelle montés mobiles l'un par rapport à l'autre sur une course longitudinale prédéterminée (L), la glissière comprenant, en outre, un détecteur (18) disposé sur l'un des profilés mâle et femelle et un organe détectable (94) disposé sur l'autre des profilés mâle et femelle, le détecteur (18) étant adapté pour détecter la présence de l'organe détectable (94) lorsque ledit organe détectable est situé dans une première plage (P1) de ladite course (L) ou l'absence dudit organe détectable (94) lorsque ledit organe détectable est situé dans une deuxième plage (P2) de la course (L), les première (P1) et deuxième (P2) plages définissant l'ensemble de la course prédéterminée (L) des profilés mâle et femelle l'un par rapport à l'autre, **caractérisée en ce que**:
- le profilé mâle (9) présente une section de forme générale en "U" comportant un fond horizontal (91) à partir duquel s'étendent deux ailes latérales (92) sensiblement verticales qui se prolongent par des rabats (93) orientés vers l'extérieur du "U", chaque rabat (93) étant pourvu d'un bord (93b),
- le profilé femelle (8) présente une section de forme générale en "U" comportant un fond horizontal (81) à partir duquel s'étendent deux parois latérales (8a) formées chacune par une aile (82) sensiblement verticale qui se prolonge par un retour d'aile (83) orienté vers l'intérieur du "U" et dirigé vers le fond (81) dudit profilé femelle (8), les rabats (93) du profilé mâle (9) venant se loger entre les ailes verticales (82) et les retours d'ailes (83) du profilé femelle (8), et les retours d'ailes (83) du profilé femelle (8) venant se loger entre les ailes verticales (92) et les rabats (93) du profilé mâle (9),
- l'organe détectable est formé par un ressaut (94) solidaire du bord (93b) d'un des rabats (93) du profilé mâle,
- et la paroi latérale correspondante (8a) du deuxième profilé (8) présente une ouverture (86) disposée en correspondance avec le détecteur (18) adapté pour détecter la présence ou l'absence du ressaut (94) du profilé mâle (9).

2. Glissière selon la revendication 1, dans laquelle le détecteur (18) est disposé au moins en partie dans l'ouverture (86) de la paroi latérale (8a) du profilé femelle.

3. Glissière selon l'une ou l'autre des revendications 1 et 2, dans laquelle le ressaut (94) s'étend longitudinalement entre deux extrémités (94a,94b) et la paroi latérale correspondante (8a) du deuxième profilé (8) qui présente l'ouverture s'étend entre deux extrémités qui sont chacune pourvues d'un élément de butée (84) destiné à coopérer avec les extrémités (94a,94b) du ressaut (94) pour délimiter ladite course longitudinale prédéterminée (L) des profilés mâle et femelle l'un par rapport à l'autre.

4. Glissière selon l'une quelconque des revendications 1 à 3, dans laquelle le détecteur (18) comprend :
- d'une part, un organe élastiquement déformable (20) ayant une première extrémité (20a) solidaire de la paroi latérale (8a) du profilé femelle (8) et une deuxième extrémité libre (20b) disposée dans l'ouverture (86) du profilé femelle et au voisinage du bord (93b) du profilé mâle (9), le ressaut (94) du profilé mâle étant disposé pour déplacer ladite extrémité libre (20b) en déformant l'organe élastiquement déformable (20) lorsque ledit ressaut est situé en regard du détecteur,
- et, d'autre part, un capteur (21) apte à détecter une déformation de l'organe élastiquement déformable (20) lorsque le ressaut (94) du profilé mâle (9) déplace l'extrémité libre (20b) dudit organe élastiquement déformable (20) .

5. Glissière selon la revendication 4, dans laquelle le capteur (21) est rapporté sur un organe de support (19) fixé de manière amovible sur la paroi latérale (8a) du profilé femelle (8), ledit capteur (21) étant disposé en regard de l'ouverture (86) du profilé femelle (8) .

6. Glissière selon l'une quelconque des revendications 1 à 3, dans laquelle le détecteur (18) comprend :
- un élément pivotant (34) ayant une extrémité montée pivotante sur un organe de support (30) rapporté sur le profilé femelle (8) et une extrémité libre disposée dans l'ouverture (86) du profilé femelle et au voisinage du bord (93b) du profilé mâle (9), le ressaut (94) du profilé mâle (9) étant disposé pour faire pivoter l'extrémité libre de l'élément pivotant (34) lorsque ledit ressaut (94) est situé en regard du détecteur (18),
- et d'autre part, un capteur monté sur l'organe de support (30), le capteur étant apte à détecter le pivotement de l'élément pivotant (34).

7. Glissière selon l'une quelconque des revendications 1 à 3, dans laquelle le détecteur (18) comprend :
- au moins un organe magnétique (23) et des moyens d'excitation (24) pour créer un champ magnétique dans ledit organe magnétique (23), ledit un organe magnétique (23) et les moyens d'excitation (24) étant au moins partiellement logés dans l'ouverture (86) du profilé femelle de façon à définir un circuit magnétique avec le ressaut (94) lorsque ce dernier se présente en regard dudit organe magnétique (23), ledit ressaut (94) étant réalisé dans une matière également magnétique,
- et une sonde à effet hall (25) solidaire de l'organe magnétique (23), ladite sonde (25) étant agencée pour délivrer un signal au moins lorsque ledit ressaut (94) est en regard de l'organe magnétique (23) en fermant le circuit magnétique.

8. Glissière selon la revendication 7, dans laquelle le détecteur (18) est fixé sur un organe de support (40) rapporté par clipsage sur la paroi latérale (8a) du profilé femelle (8).

9. Glissière selon la revendication 8, dans laquelle l'organe de support (40) présente une section de forme générale en "U" comportant :
- une plaque intermédiaire (41) sur laquelle est rapporté le détecteur (18) logé dans l'ouverture (86) réalisée sur l'aile verticale (82) du profilé femelle,
- une plaque d'extrémité (42) qui s'étend à partir de la plaque intermédiaire (41) et qui présente une forme complémentaire de celle du retour d'aile (83) dudit profilé femelle (8), et
- deux doigts de clipsage (43) qui s'étendent à partir de la plaque intermédiaire (41), les deux doigts de clipsage (43) étant engagés dans des trous (88) réalisés dans une zone de coin (87) situé entre le fond (81) du profilé femelle et l'aile verticale (82) correspondante dudit profilé femelle.

10. Glissière selon la revendication 9, dans laquelle l'organe de support (40) comprend, en outre, un élément rabattable (44) relié à la plaque intermédiaire (41) et qui est destiné à être rabattu entre les deux doigts de clipsage (43) et contre la zone de coin (87) du profilé femelle (8), de manière à verrouiller l'organe de support (40) sur le profilé femelle après engagement des doigts de clipsage (43) dans les trous (88) correspondants.

11. Siège de véhicule comprenant une assise (3) supportée par au moins une glissière (7) selon l'une quelconque des revendications 2 à 10.

12. Système pour véhicule, **caractérisé en ce qu'**il comprend :
- un siège (2) de véhicule selon la revendication 11,
- au moins un dispositif actionneur (10) présentant deux modes de fonctionnement, et
- un dispositif de commande (15) relié au détecteur (18) de la glissière et adapté pour faire fonctionner le dispositif actionneur (10) sélectivement selon l'un de ses deux modes de fonctionnement en fonction de la position du siège (2) par rapport au plancher (6) du véhicule détectée par le détecteur (18) de la glissière.

13. Système selon la revendication 12, dans lequel le dispositif actionneur (10) est un sac de sécurité gonflable disposé pour protéger un occupant du siège en cas d'accident, et le dispositif de commande (15) est adapté pour gonfler le sac de sécurité (10) en cas d'accident.

## Patentansprüche

1. Gleitschiene für einen Fahrzeugsitz, mit einem Einsteckprofilteil und einem Aufnahmeprofilteil, die über eine vorbestimmte Wegstrecke (L) zueinander in Längsrichtung beweglich montiert sind, wobei die Gleitschiene außerdem einen Detektor (18), der auf dem einen Einsteck- oder Aufnahmeprofilteil angeordnet ist, und eine erfassbare Einrichtung (94) aufweist, die auf dem anderen Einsteck- oder Aufnahmeprofilteil angeordnet ist, wobei der Detektor (18) ausgebildet ist, um das Vorhandensein der erfassbaren Einrichtung (94) zu erfassen, wenn die erfassbare Einrichtung sich in einem ersten Bereich (P1) der Wegstrecke (L) befindet, oder die Abwesenheit der erfassbaren Einrichtung (94) zu erfassen, wenn die erfassbare Einrichtung sich in einem zweiten Bereich (P2) der Strecke (L) befindet, wobei der erste (P1) und der zweite Bereich (P2) die Gesamtheit der vorbestimmten Wegstrecke (L) des Einsteck- und des Aufnahmeprofilteils zueinander definieren,
**dadurch gekennzeichnet, dass**:
- das Einsteckprofilteil (9) einen allgemein U-förmigen Querschnitt aufweist, der einen waagrechten Boden (91) besitzt, von dem aus sich zwei seitliche, im wesentlichen senkrechte Schenkel (92) erstrecken, die sich durch Umschläge (93) verlängern, die zur Außenseite des "U" gerichtet sind, wobei jeder Umschlag (93) mit einer Kante (93b) versehen ist,
- das Aufnahmeprofilteil (8) einen allgemein U-förmigen Querschnitt aufweist, der einen waagrechten Boden (81) besitzt, von dem aus sich zwei Seitenwände (8a) erstrecken, die von je von einem im wesentlichen senkrechten Schenkel (82) gebildet werden, der sich durch eine zum Inneren des "U" gerichtete und zum Boden (81) des Aufnahmeprofilteils (8) weisende Schenkeleinbiegung (83) verlängert, wobei die Umschläge (93) des Einsteckprofilteils (9) sich zwischen die senkrechten Schenkel (82) und die Schenkeleinbiegungen (83) des Aufnahmeprofilteils (8) einfügen, und die Schenkeleinbiegungen (83) des Aufnahmeprofilteils (8) sich zwischen die senkrechten Schenkel (92) und die Umschläge (93) des Einsteckprofilteils (9) eingefügen,
- die erfassbare Einrichtung von einem Vorsprung (94) gebildet wird, der fest mit der Kante (93b) eines der Umschläge (93) des Einsteckprofilteils verbunden ist,
- und die entsprechende Seitenwand (8a) des zweiten Profilteils (8) eine Öffnung (86) aufweist, die in Übereinstimmung mit dem Detektor (18) angeordnet ist, der ausgebildet ist, um das Vorhandensein oder die Abwesenheit des Vorsprungs (94) des Einsteckprofilteils (9) zu erfassen.

2. Gleitschiene nach Anspruch 1, bei der der Detektor (18) zumindest teilweise in der Öffnung (86) der Seitenwand (8a) des Aufnahmeprofilteils angeordnet ist.

3. Gleitschiene nach Anspruch 1 oder 2, bei der der Vorsprung (94) sich in Längsrichtung zwischen zwei Enden (94a, 94b) erstreckt, und die entsprechende Seitenwand (8a) des zweiten Profilteils (8), welche die Öffnung aufweist, sich zwischen zwei Enden erstreckt, die je mit einem Anschlagelement (84) versehen sind, welches dazu bestimmt ist, mit den Enden (94a, 94b) des Vorsprungs (94) zusammenzuwirken, um die vorbestimmte Wegstrecke (L) der Einsteckund Aufnahmeprofilteile in Längsrichtung zueinander zu begrenzen.

4. Gleitschiene nach einem der Ansprüche 1 bis 3, bei der der Detektor (18) aufweist:
- einerseits ein elastisch verformbares Organ (20), dessen erstes Ende (20a) fest mit der Seitenwand (8a) des Aufnahmeprofilteils (8) verbunden ist und dessen zweites, freies Ende (20b) in der Öffnung (86) des Aufnahmeprofilteils und in der Nähe der Kante (93b) des Einsteckprofilteils (9) angeordnet ist, wobei der Vorsprung (94) des Einsteckprofilteils angeordnet ist, um das freie Ende (20b) zu verschieben, indem das elastisch verformbare Organ (20) verformt wird, wenn der Vorsprung sich vor dem Detektor befindet,
- und andererseits einen Sensor (21), der eine Verformung des elastisch verformbaren Organs (20) erfassen kann, wenn der Vorsprung (94) des Einsteckprofilteils (9) das freie Ende (20b) des elastisch verformbaren Organs (20) verschiebt.

5. Gleitschiene nach Anspruch 4, bei der der Sensor (21) in ein Trägerorgan (19) eingebaut ist, das lösbar an der Seitenwand (8a) des Aufnahmeprofilteils (8) befestigt ist, wobei der Sensor (21) vor der Öffnung (86) des Aufnahmeprofilteils (8) angeordnet ist.

6. Gleitschiene nach einem der Ansprüche 1 bis 3, bei der der Detektor (18) aufweist:
- ein schwenkbares Element (34), dessen eines Ende schwenkbar an einem Trägerorgan (30) befestigt ist, das an das Aufnahmeprofilteil (8) angebaut ist, und dessen freies Ende in der Öffnung (86) des Aufnahmeprofilteils und in der Nähe der Kante (93b) des Einsteckprofilteils (9) angeordnet ist, wobei der Vorsprung (94) des Einsteckprofilteils (9) so angeordnet ist, dass er das freie Ende des schwenkbaren Elements (34) schwenken lässt, wenn der Vorsprung (94) sich vor dem Detektor (18) befindet,
- und andererseits einen Sensor, der auf das Trägerorgan (30) montiert ist, wobei der Sensor in der Lage ist, das Schwenken des schwenkbaren Elements (34) zu erfassen.

7. Gleitschiene nach einem der Ansprüche 1 bis 3, bei der der Detektor (18) aufweist:
- mindestens ein magnetisches Bauteil (23) und Erregungsmittel (24), um im magnetischen Bauteil (23) ein Magnetfeld zu erzeugen, wobei das magnetische Bauteil (23) und die Erregungsmittel (24) zumindest teilweise in der Öffnung (86) des Aufnahmeprofilteils angeordnet sind, um mit dem Vorsprung (94) einen Magnetkreis zu definieren, wenn dieser sich vor dem magnetischen Bauteil (23) befindet, wobei der Vorsprung (94) aus einem ebenfalls magnetischen Material besteht,
- und eine fest mit dem magnetischen Bauteil (23) verbundene Hallsonde (25), wobei die Sonde (25) so gestaltet ist, dass sie zumindest dann ein Signal liefert, wenn der Vorsprung (94) sich vor dem magnetischen Bauteil (23) befindet und dadurch den Magnetkreis schließt.

8. Gleitschiene nach Anspruch 7, bei der der Detektor ( 18) an einem Trägerorgan (40) befestigt ist, das durch Einschnappen auf die Seitenwand (8a) des Aufnahmeprofilteils (8) aufgesetzt wird.

9. Gleitschiene nach Anspruch 8, bei der das Trägerorgan (40) einen allgemein U-förmigen Querschnitt hat, der aufweist:
- eine Zwischenplatte (41), auf die der Detektor (18) aufgesetzt ist, der in der Öffnung (86) angeordnet ist, die im senkrechten Schenkel (82) des Aufnahmeprofilteils ausgebildet ist,
- eine Endplatte (42), die sich ausgehend von der Zwischenplatte (41) erstreckt und die eine zur Schenkeleinbiegung (83) des Aufnahmeprofilteils (8) komplementäre Form hat, und
- zwei Einschnappfinger (43), die sich ausgehend von der Zwischenplatte (41) erstrecken, wobei die beiden Einschnappfinger (43) in Löcher (88) eingeführt sind, die in einem Eckbereich (87) ausgebildet sind, der sich zwischen dem Boden (81) des Aufnahmeprofilteils und dem entsprechenden senkrechten Schenkel (82) des Aufnahmeprofilteils befindet.

10. Gleitschiene nach Anspruch 9, bei der das Trägerorgan (40) außerdem ein umklappbares Element (44) aufweist, das mit der Zwischenplatte (41) verbunden und dazu bestimmt ist, zwischen die beiden Einschnappfinger (43) und gegen den Eckbereich (87) des Aufnahmeprofilteils (8) umgeklappt zu werden, um das Trägerorgan (40) auf dem Aufnahmeprofilteil zu verriegeln, nachdem die Einschnappfinger (43) in die entsprechenden Löcher (88) eingeführt wurden.

11. Fahrzeugsitz mit einer Sitzfläche (3), die von mindestens einer Gleitschiene (7) nach einem der Ansprüche 2 bis 10 getragen wird.

12. System für ein Fahrzeug, **dadurch gekennzeichnet, dass** es aufweist:
- einen Fahrzeugsitz (2) nach Anspruch 11,
- mindestens eine Betätigungsvorrichtung (10), die zwei Betriebsarten aufweist, und
- eine Steuervorrichtung (15), die mit dem Detektor (18) der Gleitschiene verbunden und angepasst ist, um die Betätigungsvorrichtung (10) in Abhängigkeit von der Position des Sitzes (2) in Bezug auf den Boden (6) des Fahrzeugs, die vom Detektor (18) der Gleitschiene erfasst wurde, wahlweise in einer ihrer Betriebsarten zu betätigen.

13. System nach Anspruch 12, bei dem die Betätigungsvorrichtung (10) ein aufblasbarer Airbag ist, der angeordnet ist, um bei einem Unfall eine auf dem Sitz befindliche Person zu schützen, und die Steuervorrichtung (15) ausgebildet ist, um den Airbag (10) bei einem Unfall aufzublasen.

## Claims

1. A runner for a vehicle seat, the runner comprising a male bar and a female bar that are mounted to move relative to each other over a predetermined stroke (L) the runner further comprising a detector (18) disposed on one of the male and female bars, and a detectable member (94) disposed on the other of the male and female bars, the detector (18) being adapted to detect the presence of the detectable member (94) while said detectable member is situated in a first fraction (P1) of said stroke (L) and the absence of said detectable member (94) while said detectable member is situated in a second fraction (P2) of the stroke (L), the first and second fractions (P1, P2) together defining the entire stroke (L) of the male and female bars relative to each other;
said runner being **characterized in that**:
- the male bar (9) is a generally channel section bar comprising a horizontal web (91) from which two substantially vertical side flanges (92) extend that are extended outwards by lips (93), each lip (93) being provided with an edge (93b);
- the female bar (8) is a generally channel section bar comprising a horizontal web (81) from which two side walls (8a) extend, each of which is formed by a substantially vertical flange (82) which is extended by a flange lip (83) extending inwards and down towards the web (81) of said female bar (8), the lips (93) of the male bar (9) being received between the vertical flanges (82) and the lips (83) of the female bar (8), and the lips (83) of the female bar (8) being received between the vertical flanges (92) and the lips (93) of the male bar (9);
- the detectable member is formed by a tab (94) that is integral with or secured to the edge (93b) of one of the lips (93) of the male bar; and
- the corresponding side wall (8a) of the second bar (B) has an opening (86) disposed in correspondence with the detector (18) adapted to detect the presence or the absence of the tab (94) of the male bar (9)

2. A runner according to claim 1, in which at least part of the detector (18) is disposed in the opening (86) in the side wall (8a) of the female bar.

3. A runner according to claim 1 or 2, in which the tab (94) extends longitudinally between two ends (94a, 94b), and the corresponding side wall (8a) of the second bar (8), which wall is provided with the opening, extends between two ends, each of which is provided with an abutment element serving to co-operate with the ends (94a, 94b) of the tab (94) to define said predetermined stroke (L) over which the male and female bars move relative to each other.

4. A device according to any one of claims 1 to 3, in which the detector (18) comprises:
- firstly an elastically-deformable member (20) having a first end (20a) secured to the side wall (8a) of the female bar (8), and a free second end (20b) disposed in the opening (86) of the female bar and in the vicinity of the edge (93b) of the male bar (9), the tab (94) of the male bar being disposed to move said free end (20b) by deforming the elastically-deformable member (20) when said tab is facing the detector; and
- secondly, a sensor (21) suitable for detecting deformation of the elastically-deformable member (20) when the tab (94) of the male bar (9) moves the free end (20b) of said elastically-deformable member (20)

5. A runner according to claim 4, in which the sensor (21) is mounted on a support member (19) that is fixed removably to the side wall (8a) of the female bar (8), said sensor (21) being disposed facing the opening (86) of the female bar (8).

6. A runner according to any one of claims 1 to 3, in which the detector (18) comprises:
- firstly, a pivotally-mounted element (34) having one end mounted to pivot on a separate support member (30) mounted on the female bar (8), and a free end disposed in the opening (86) in the female bar and in the vicinity of the edge (93b) of the male bar (9), the tab (94) of the male bar (9) being disposed to cause the free end of the pivotally-mounted element (34) to pivot when said tab (94) is facing the detector (18); and
- secondly, a sensor mounted on the support member (30), the sensor being suitable for detecting pivoting of the pivotally-mounted element (34)

7. A runner according to any one of claims 1 to 3, in which the detector (18) comprises:
- at least one magnetic member (23) and excitation means (24) for generating a magnetic field in said magnetic member (23), said magnetic member (23) and the excitation means (24) being received, at least in part, in the opening (86) in the female bar, so as to cooperate with the tab (94) to define a magnetic circuit while said tab is present facing said magnetic member (23), said tab (94) being made of a material that is also magnetic; and
- a Hall-effect probe (25) secured to the magnetic member (23), said probe (25) being organized to deliver a signal at least when said tab (94) is facing the magnetic member (23) by closing the magnetic circuit.

8. A runner according to claim 7, in which the detector (18) is fixed to a support member (40) that is mounted on the side wall (8a) of the female bar (B) by clipping.

9. A runner according to claim 8, in which the support member (40) is a generally channel section member comprising:
- an intermediate plate (41) on which the detector (18) is mounted by being received in the opening (86) provided in the vertical flange (82) of the female bar;
- an end plate (42) which extends from the intermediate plate (41) and which has a shape complementary to the shape of the lip (83) of said female bar (8); and
- two clipping fingers (43) which extend from the intermediate plate (41), the two clipping fingers (43) being engaged in holes (88) provided in a wedge zone (87) situated between the web (81) of the female bar, and the corresponding vertical flange (82) of the female bar.

10. A runner according to claim 9, in which the support member (40) further comprises a fold-over element (44) which connected to the intermediate plate (41) and which serves to be folded over between the two clipping fingers (43) and against the wedge zone (87) of the female bar (8), so as to lock the support member (40) onto the female bar after the clipping fingers (43) have been engaged in the corresponding holes (88)

11. A vehicle seat including a seat proper (3) supported by at least one runner (7) according to any one of claims 2 to 10.

12. A system for a vehicle, said system being **characterized in that** it comprises:
- a vehicle seat (2) according to claim 11;
- at least one actuator device (10) having two operating modes; and
- a control device (15) connected to the detector (18) of the runner and suitable for causing the actuator device (10) to operate selectively in one or other of its two operating modes depending on the position of the seat (2) relative to the floor of the vehicle as detected by the detector (18) of the runner.

13. A system according to claim :2, in which the actuator device (10) is an airbag disposed to protect an occupant of the seat in the event of an accident, and the control device (15) is adapted to inflate the airbag (10) in the event of an accident.
